# EUROPEAN PATENT APPLICATION

(11) **EP 4 611 331 A1**
(43) Date of publication of application: **03.09.2025**
(21) Application number: 23893756.9
(22) Date of filing: 17.11.2023
(51) Int. Cl.: H04L 41/08

(54) **DEVICE MANAGEMENT METHOD AND APPARATUS, AND DEVICE AND STORAGE MEDIUM**

(30) Priority: 24.11.2022 CN 202211486018
(71) Applicant: BEIJING YOUZHUJU NETWORK TECHNOLOGY CO. LTD., Beijing 101299 (CN)
(72) Inventor: YU, Lei, Beijing 100028 (CN); WANG, Hui, Beijing 100028 (CN); DOU, Jinbao, Beijing 100028 (CN); XIE, Ning, Beijing 100028 (CN); TANG, Yiwei, Beijing 100028 (CN); ZHANG, Jian, Beijing 100028 (CN); WANG, Xiaohua, Beijing 100028 (CN); DING, Fei, Beijing 100028 (CN); WANG, Jian, Beijing 100028 (CN)
(74) Representative: Grünecker Patent- und Rechtsanwälte PartG mbB
(86) International application number: PCT/CN2023/132442
(87) International publication number: WO 2024/109666

(57) **Abstract**

According to embodiments of the present disclosure, method, apparatus, device, and computer readable storage medium of device management are provided. The method comprises: receiving a first configuration command at a first baseboard management controller BMC associated with a processing unit, the first BMC being currently in a management network; causing the first BMC to join a virtual local area network VLAN where a server is located according to the first configuration command, the processing unit being connected to the server; and in response to receiving a management command for the processing unit, forwarding the management command to the server via the VLAN. In this way, by configuring the BMC associated with the processing unit to perform the forwarding of the management command for the server, such a device management process is simpler and more convenient.

## Description

This application claims the priority of the Chinese invention patent application titled "Method, Apparatus, Device, and Storage Medium of Device Management" filed on November 24, 2022, with the application number 202211486018.8, the entire content of which being incorporated into this application by reference.

### FIELD

Example embodiments of the present disclosure generally relate to the field of computer technology, and in particular, to method, apparatus, device, and computer readable storage medium of device management.

### BACKGROUND

With the increasing requirements of data centers for networks and storage, and the additional consumption of system resources by virtualization technologies, introducing additional processing devices, such as data processing units (DPUs), into servers has become an increasingly popular solution. A DPU is generally a device that integrates a processing unit, a network, a field programmable gate array (FPGA), and a baseboard management controller (BMC). Such an integrated device may complete management and isolation of a server, and meet data computing requirements of, for example, cloud computing. In a server architecture connected with additional processing devices, how to effectively implement device management and operation and maintenance is a difficult point.

### SUMMARY

In a first aspect of the present disclosure, a method of device management is provided. The method comprises: receiving a first configuration command at a first baseboard management controller BMC associated with a processing unit, the first BMC being currently in a management network; causing the first BMC to join a virtual local area network VLAN where a server is located according to the first configuration command, the processing unit being connected to the server; and in response to receiving a management command for the processing unit, forwarding the management command to the server via the VLAN.

In a second aspect of the present disclosure, a baseboard management controller BMC is provided. The BMC comprises a first receiving module configured to receive a first configuration command when in a management network; a network joining module configured to cause the BMC to join a virtual local area network VLAN where a server is located according to the first configuration command, a processing unit associated with the BMC being connected to the server; and a command forwarding module configured to, in response to receiving a management command for the processing unit, forward the management command to the server via the VLAN.

In a third aspect of the present disclosure, a processing device is provided. The processing device comprises a processing unit; and a baseboard management controller BMC associated with the processing unit, the BMC being configured to: receive a first configuration command when in a management network, join the VLAN according to the first configuration command; and in response to receiving a management command for the processing unit, forward the management command to the server via the VLAN.

In a fourth aspect of the present disclosure, a service system is provided. The service system comprises a processing unit; a server, connected to the processing unit, the processing unit and the server being configured to communicate with each other in a virtual local area network VLAN; and a first baseboard management controller BMC associated with the processing unit, the first BMC being configured to operate in a management network and configured to: receive a first configuration command; join the VLAN according to the first configuration command; and in response to receiving a management command for the processing unit, forward the management command to the server via the VLAN.

In a fifth aspect of the present disclosure, a computer readable storage medium is provided. The medium has a computer program stored thereon, the computer program, when executed by a processor, implementing the method of the first aspect.

It should be understood that the content described in this section is not intended to limit the key features or important features of the embodiments of the present disclosure, nor is it used to limit the scope of the present disclosure. Other features of the present disclosure will become easily understandable through the following description.

### BRIEF DESCRIPTION OF DRAWINGS

The above and other features, advantages, and aspects of various embodiments of the present disclosure will become more apparent when combined with the accompanying drawings and with reference to the following detailed description. In the drawings, the same or similar reference numerals refer to the same or similar elements, wherein:
FIG. 1 illustrates a schematic diagram of an example service system in which embodiments of the present disclosure may be implemented;
FIG. 2 illustrates a schematic diagram of the structure of a service system in case of processing unit maintenance according to some embodiments of the present disclosure;
FIG. 3 illustrates a flowchart of the process for device management according to some embodiments of the present disclosure;
FIG. 4 illustrates a block diagram of a baseboard management controller according to some embodiments of the present disclosure; and
FIG. 5 illustrates a block diagram of a processing device according to some embodiments of the present disclosure; and
FIG. 6 illustrates a block diagram of an device capable of implementing a plurality of embodiments of the present disclosure.

### DETAILED DESCRIPTION

Embodiments of the present disclosure will be described in more detail below with reference to the accompanying drawings. Although some embodiments of the present disclosure are shown in the drawings, it would be appreciated that the present disclosure can be implemented in various forms and should not be interpreted as limited to the embodiments described herein. On the contrary, these embodiments are provided for a more thorough and complete understanding of the present disclosure. It would be appreciated that the drawings and embodiments of the present disclosure are only for illustrative purposes and are not intended to limit the scope of protection of the present disclosure.

In the description of the embodiments of the present disclosure, the term "including" and similar terms should be understood as open-ended inclusion, that is, "including but not limited to". The term "based on" should be understood as "at least partially based on". The terms "one embodiment" or "the embodiment" should be understood as "at least one embodiment". The term "some embodiments" should be understood as "at least some embodiments". The following may also include other explicit and implicit definitions.

It may be understood that, for descriptions and terms with English abbreviation, using the full Chinese name, the full English name or the English abbreviation should all be understood in the same way. For example, data processing unit, DPU and data processing unit DPU all refer to the same content.

It may be understood that the data involved in this technical solution (including but not limited to the data itself, data observation or use) should comply with the requirements of corresponding laws, regulations and relevant provisions.

In the server, the management side conducts out-of-band management based on the BMC of the server. After adding a processing device (for example, the DPU), the BMC of the server may be directly controlled by the processing device. Thus, the management side needs to implement out-of-band management via the DPU. However, when the DPU fails, the out-of-band communication between the DPU and the management side is disconnected, so that the management side cannot remotely manage the server or the DPU.

A common practice is to integrate a switch in the processing device and implement network partitioning through the switch to isolate the network of the BMC of the server and the processing device. In this way, service operation and management and operation and maintenance may be conveniently implemented.

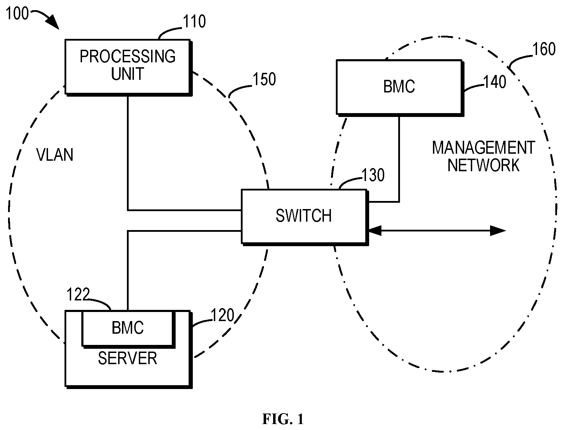

FIG. 1 illustrates a schematic diagram of an example service system 100 in which embodiments of the present disclosure can be implemented. In the service system 100, the processing unit 110, the switch 130, and the baseboard management controller (BMC) 140 are associated with each other. In some embodiments, the BMC 140 and the processing unit 110 may be integrated in the same processing device, for example, integrated in the DPU. In some embodiments, the processing unit 110, the switch 130, and the BMC 140 may be integrated in the same processing device.

In some embodiments, the processing unit 110 may include components used to run the service of the server in the processing device, for example, a system-on-chip (SoC) of the DPU. In the service system 100, a network for service execution, such as VLAN 150, and a network for management and operation and maintenance, such as a management network 160, may be partitioned by the switch 130. The switch 130 is at least configured to perform data exchange between the management network 160 and the VLAN 150.

In VLAN 150, the processing unit 110 is communicatively connected to the server 120 via the switch 130. Thus, the server 120 may dispatch the corresponding service to the processing unit 110 for execution. The BMC 140 is located in the management network 160 and is also connected to the switch 130. Thus, the BMC 140 may control and manage the processing unit 110 via the switch 130. In some embodiments, the server 120 further includes its own BMC 122. The BMC 122 is configured to be connected to the switch 130 for management and control of the server 120. Here, for ease of discussion, the BMC 140 associated with the processing unit 110 is sometimes referred to as a first BMC, and the BMC 122 associated with the server 120 is sometimes referred to as a second BMC.

In some embodiments, management commands for the processing unit 110 and / or the server 120 may be provided to the switch 130 via the management network 160. The management commands may be initiated by managers, operation and maintenance personnel, for example, they may be transmitted to the switch 130 via a corresponding management device or be manually configured to the switch 130. The management device herein may be any device that can be used to initiate management commands. The switch 130 may then send the management commands to the corresponding destination device in VLAN 150.

It should be understood that the structures and functions of each element in the service system 100 are described only for exemplary purposes and do not imply any limitation on the scope of the present disclosure.

In the case of network isolation between the VLAN where the server is located and the management network used for management, if the processing unit fails, the current common solution is to remove the VLAN configuration of the server and configure the server to be connected to the management network. Thus, the processing unit connected to the server may be maintained via the BMC of the server. However, this process will involve very cumbersome steps. Specifically, when the processing unit fails, the BMC of the server needs to be configured to enable Dynamic Host Configuration Protocol (DHCP). Then, the VLAN of the switch is unlocked, and the DHCP is configured for the BMC of the server in the management network to assign an Internet Protocol (IP) address in the management network to the server. After the BMC in the server obtains the IP address, the BMC may be managed through the BMC to repair the failure of the processing unit. After the fault is recovered, the VLAN of the switch needs to be restored again, and the BMC of the server needs to be configured to make it return to the normal mode, that is, to join the VLAN.

The above process not only involves very cumbersome configurations, but also from the perspective of the management network, although the server joining the management network is dynamic (i.e., it only needs to join when a failure occurs), resources such as IP addresses and DHCP servers always need to be reserved for the server in the management network. Considering that the management network usually needs to manage a large number of servers, the IP and DHCP resources are limited, such resource reservation results in low resource utilization of the management network and limits network expansion.

In view of the above and other potential problems, in an example embodiment of the present disclosure, an improved solution for device management is provided. In this solution, instead of BMC of the server, the BMC associated with the processing unit is used to control device management. Specifically, as needs, for example, when the processing unit fails, the BMC associated with the processing unit is dynamically configured to join the VLAN where the server is located. Thus, the management commands for the processing unit may be forwarded to the server through the BMC in the VLAN, to manage and maintain the server and the processing unit connected to the server.

By configuring the BMC associated with the processing unit to perform the forwarding of the management command to the server, such a device management process is simpler and more convenient. During the maintenance (for example, fault repair) of the processing unit, the server may remain configured in the VLAN, thereby reducing the difficulty of management and maintenance caused by the dynamic configuration of the server. On the other hand, there is no need to reserve network resources for the server in the management network, nor is it necessary to perform complex operations for the server. This method may reduce the resource reservation requirements on the management side, improve resource utilization, and also simplify the operational complexity during the maintenance of the processing unit.

The following will continue to describe some example embodiments of the present disclosure with reference to the accompanying drawings.

In embodiments of the present disclosure, it is assumed that in the case that the service system has no failure, each component in the service system 100 may operate according to the configuration shown in FIG. 1. As described above, in the service system 100, the processing unit 110 is connected to the server 120, for example, the processing unit 110 is inserted into the server 120 as a processing card. The processing unit 110 and the server 120 are configured to communicate with each other in VLAN 150. In addition, the BMC 140 associated with the processing unit 110 is configured to operate in the management network 160. The switch 130 is configured to implement the network isolation between the VLAN 150 and the management network 160.

In some embodiments, as will be described below, during normal service operation as well as management and maintenance processes, for example, during the failure repair process of the processing unit 110, the network configuration of the server 120 may remain unchanged. Therefore, for the server 120 and the BMC 122 therein, a static IP address, i.e., a static IP address in the VLAN 150, may be configured. Network resources such as IP and DHCP may not be reserved for the BMC 122 of the server 120 in the management network 160.

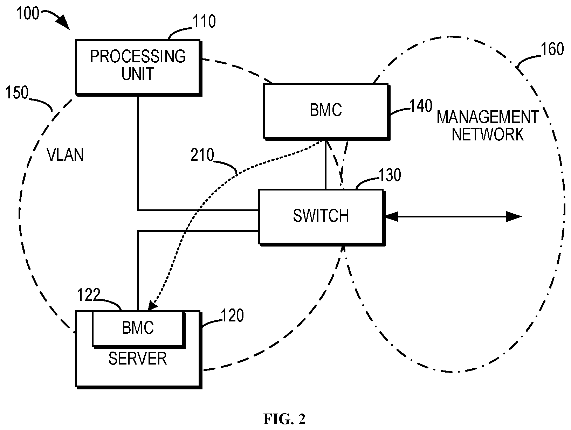

In some cases, according to management needs, for example, when it is detected that the processing unit 110 has failed, it is necessary to send a management command to the server 120 (more specifically, to the BMC 122 in the server 120) to complete the failure repair of the processing unit 110. According to embodiments of the present disclosure, the service system 100 may be configured to change from the network connection mode in FIG. 1 to the network connection mode in FIG. 2. The network connection changes from FIG. 1 to FIG. 2 may be configured as follows.

Specifically, according to the management needs, the BMC 140 receives a configuration command (also called as "first configuration command"). The first configuration command is used to configure the BMC 140 to join the VLAN 150. In some embodiments, since the BMC 140 is in the management network 160, the first configuration command may be received via the management network 160. In some embodiments, the first configuration command may be sent to the BMC 140 by the operation and maintenance personnel through an out-of-band tool.

According to the first configuration command, the BMC 140 will join the VLAN 150 where the server 120 is located, as shown in FIG. 2. In some embodiments, the first configuration command includes a joining configuration of the VLAN 150, such as an IP address available for the BMC 140 in the VLAN 150. In some embodiments, the first configuration command further includes a network forwarding configuration from the BMC 140 to the server 120, such as a static IP address of the BMC 122 of the server 120 in the VLAN 150. In some embodiments, the IP address that may be assigned to the BMC 140 in the VLAN 150 and the available IP address of the server 120 may be pre-maintained. The first configuration command is used to trigger a network configuration of the BMC 140, so that the BMC 140 can join the VLAN 150.

By configuring the BMC 140 to join the VLAN 150, since the server 120 and its BMC 122 are also in the VLAN 150, there may be a data forwarding path 210 between the BMC 140 and the server 120. Of course, although the data forwarding path 210 directly connecting the BMC 140 and the server 120 is shown in FIG. 2, data forwarding in the VLAN 150 may be implemented via the switch 130 in actual implementation.

After configuring the network connection of the service system 100 to the connection mode shown in FIG. 2, the forwarding of management command may be performed through the BMC 140, enabling the operation and maintenance personnel to access the server 120 and the BMC 122 thereof. Specifically, the BMC 140 receives the management command for the processing unit 110 and forwards the management command to the server 120 via the VLAN 150. In some embodiments, the management command may be forwarded to the server 120 within the VLAN 150 according to the static IP address of the server in the VLAN. In some embodiments, the management command is sent to the BMC 122 of the server 120. In some embodiments, the data forwarding between the BMC 140 and the BMC 122 of the server 120 may be carried out by means of network port forwarding via the switch 130.

In some embodiments, the BMC 140 may receive the management command via the management network 160. For example, the operation and maintenance personnel may send a management command to the BMC 140 through an out-of-band tool. After receiving the management command, the BMC 140 may forward the management command to the server 120 through the switch 130 in the VLAN 150. Through network configuration and forwarding of the BMC 140, the operation and maintenance personnel can access the BMC 122 in the server 120. The management command may include various management and control signals for the processing unit 110. In the case of a failure of the processing unit 110, the management command may include various commands for performing failure recovery of the processing unit 110. The embodiments of the present disclosure do not limit the specific content of the management command. During the management (e.g., fault repair) for the processing unit 110, a plurality of management commands may be sent to the server 120 (or the BMC 122 therein) through the BMC 140 according to specific application needs.

In some embodiments, according to needs, the network connection mode shown in FIG. 2 may also be restored to the network connection in the normal mode shown in FIG. 1 by configuring the BMC 140. In some embodiments, further configuration may be performed on the BMC 140 in FIG. 2 when it is determined that the failure of the processing unit has been recovered. In particular, the BMC 140 may receive additional configuration command (referred to herein as "second configuration command"). The second configuration command is used to configure the BMC 140 to exit the VLAN 150. In some embodiments, the second configuration command may be sent to the BMC 140 by the operation and maintenance personnel through an out-of-band tool.

According to the second configuration command, the BMC 140 will exit the VLAN. In some embodiments, the second configuration command may indicate an exit configuration of the VLAN and a network forwarding cessation from the BMC to the server. After receiving the second configuration command, the BMC 140 exits the VLAN 150 based on the exit configuration and terminates the network forwarding from the BMC 140 to the server 120. Thus, the service system 100 returns to the original configuration shown in FIG. 1. The failure of the processing unit 110 is repaired, so that the service system 100 can operate normally.

According to the above device management manner, when the processing unit fails, there is no need to change the configuration of the server and its BMC, instead, the management of the server is completed by configuring the network connection and the data forwarding of the BMC associated with the processing unit. In addition, after the failure is recovered, the normal service operation state may also be restored by simply configuring the BMC associated with the processing unit to leave. In this process, the network topology and management process are simplified, and there are no additional requirements for the management network background. In addition, there is no need to dynamically obtain IP addresses from the management network, making the network connection more stable.

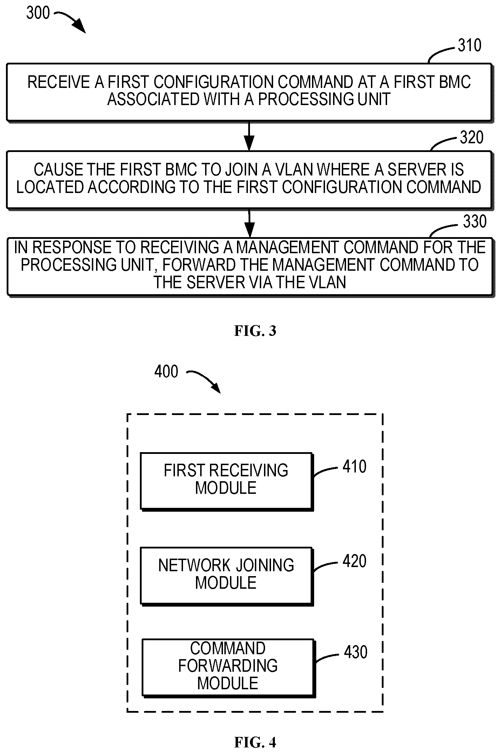

FIG. 3 shows a flowchart of a process 300 for a device management method according to some embodiments of the present disclosure. The process 300 is performed at the BMC 140 in the service system 100.

At block 310, receive a first configuration command at a first baseboard management controller BMC (for example, BMC 140) associated with a processing unit. The first BMC is currently in a management network. The first BMC is currently in the management network. In some embodiments, the processing unit includes a system-on-chip (SoC) of the data processing unit (DPU).

In block 320, cause the first BMC to join a virtual local area network VLAN where a server is located according to the first configuration command, the processing unit being connected to the server.

In some embodiments, the first configuration command indicates a joining configuration of the VLAN and a network forwarding configuration from the first BMC to the server. In some embodiments, receiving the first configuration command includes: in response to the processing unit failing, receiving the first configuration command.

At block 330, in response to receiving a management command for the processing unit, forward the management command to the server via the VLAN. After joining the VLAN, the first BMC may communicate with the server in the VLAN via the VLAN, so that the management command may be forwarded to the server via the VLAN.

In some embodiments, forward the management command to the server via the VLAN comprises: forward the management command to a second BMC associated with the server via the VLAN. In some embodiments, forwarding the management command to the server via the VLAN comprises: forwarding the management command to the server according to the static IP address of the server in the VLAN. In some embodiments, the management command is received via the management network, the management network and the VLAN being separated by a switch associated with the processing unit.

In some embodiments, the method 300 further includes: receiving a second configuration command at the first BMC; and causing the first BMC to exit the VLAN according to the second configuration command.

In some embodiments, the second configuration command indicates an exit configuration of the VLAN and a network forwarding cessation from the first BMC to the server. In some embodiments, receiving the second configuration command includes: in response to the failure of the processing unit being recovered, receiving the second configuration command.

It should be understood that relevant implementations may all refer to relevant discussions of each part of the service system 100 in FIG. 1 and FIG. 2, and no repeated explanations will be provided here.

FIG. 4 illustrates a block diagram of the BMC 400 according to some embodiments of the present disclosure. The BMC 400 may be implemented or be included in a structure of a service system. The various modules / components in the BMC 400 may be implemented by hardware, software, firmware, or any combination thereof. In some embodiments, the BMC 400 may include or be implemented in the BMC 140 of FIG. 1 and FIG. 2.

As shown in FIG. 4, the BMC 400 includes a first receiving module 410 configured to receive a first configuration command when in a management network. The BMC 400 further includes a network joining module 420, configured to cause the BMC 400 to join a VLAN where the server is located according to the first configuration command, and a processing unit associated with the BMC is connected to the server. The BMC 400 further includes a command forwarding module 430 configured to forward the management command to the server via the VLAN in response to receiving a management command for the processing unit.

In some embodiments, the first configuration command indicates a joining configuration of the VLAN and a network forwarding configuration from the BMC 400 to the server.

In some embodiments, the first receiving module 410 is further configured to: in response to the processing unit failing, receive the first configuration command.

In some embodiments, the management command is received via the management network, the management network and the VLAN being separated by a switch associated with the processing unit.

In some embodiments, the processing unit in the BMC 400 includes a system-on-chip (SoC) of the data processing unit (DPU).

In some embodiments, the BMC 400 further includes: a second receiving module configured to receive a second configuration command at the BMC 400; and a network exit module configured to cause the BMC 400 to exit the VLAN according to the second configuration command. In some embodiments, the second configuration command indicates an exit configuration of the VLAN and a network forwarding cessation from the BMC 400 to the server. In some embodiments, the second receiving module is further configured to: in response to the failure of the processing unit being recovered, receive the second configuration command.

In some embodiments, the command forwarding module 430 is further configured to forward the management command to the second BMC associated with the server via the VLAN.

In some embodiments, the command forwarding module 430 is further configured to forward the management command to the server according to the static IP address of the server in the VLAN.

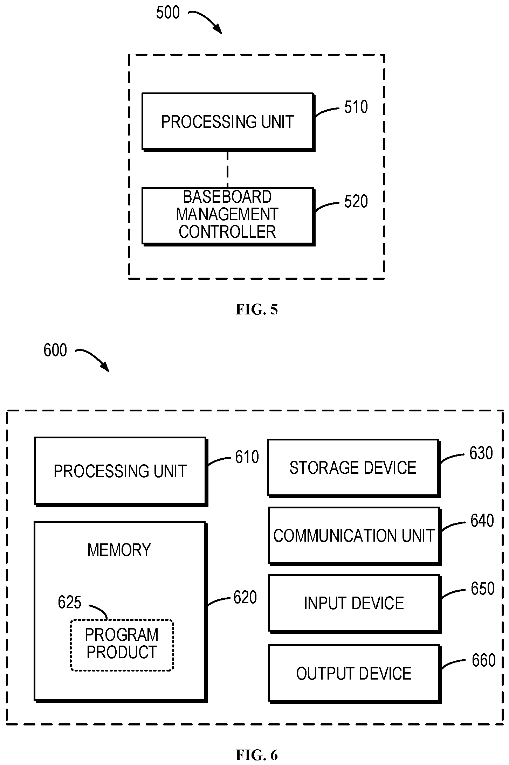

FIG. 5 illustrates a block diagram of a processing device 500 in which one or more embodiments of the present disclosure may be implemented, including a processing unit 510 and a baseboard management controller (BMC) 520. The processing device 500 shown in FIG. 5 may be connected to a server in the service system 100. The processing unit 510 may be implemented as or be included in the processing unit 110 in FIG. 1 or FIG. 2, and the BMC 520 is implemented as or included in the first BMC 140 in FIG. 1 or FIG. 2 or the BMC 400 in FIG. 4. Functions and implementations that can be implemented by components in the processing device 500 may refer to the above discussion, and no repeated explanations will be provided here. It should be understood that the processing device 500 shown in FIG. 5 is merely exemplary and should not constitute any limitation on the functionality and scope of the embodiments described herein. The processing device 500 may also include more other components.

FIG. 6 illustrates a block diagram of a device 600 capable of implementing one or more embodiments of the present disclosure. It should be understood that the device 600 shown in FIG. 6 is only illustrative and should not constitute any limitation on the functionality and scope of the embodiments described herein. The device 600 shown in FIG. 6 may be used to implement the server 120 in FIG.1 or FIG. 2.

As shown in FIG. 6, the device 600 is in the form of a general-purpose computing device. The components of device 600 may include, but are not limited to, one or more processors or processing units 610, a memory 620, a storage device 630, one or more communication units 640, one or more input devices 650, and one or more output devices 660. The processing unit 610 may be an actual or virtual processor and may execute various processes based on the programs stored in the memory 620. In a multiprocessor system, multiple processing units execute computer executable instructions in parallel to improve the parallel processing capability of the device 600.

The device 600 typically includes multiple computer storage medium. Such medium may be any available medium that may be accessed by the device 600, including but not limited to volatile and non-volatile medium, removable and non-removable medium. The memory 620 may be volatile memory (such as registers, a cache, a random access memory (RAM)), a non-volatile memory (such as a read-only memory (ROM), an electrically erasable programmable read-only memory (EEPROM), a flash memory), or some combination of them. The storage device 630 may be a removable or non-removable medium, and may include machine readable medium such as flash drives, disks, or any other medium that may be used to store information and/or data (such as training data for training) and may be accessed within the device 600.

The device 600 may further include additional removable/non-removable, volatile/nonvolatile storage medium. Although not shown in FIG. 6, a disk driver for reading from or writing to a removable, non-volatile disk (such as a "floppy disk") and an optical disk driver for reading from or writing to a removable, non-volatile optic disk may be provided. In these cases, each driver may be connected to the bus (not shown) by one or more data medium interfaces. The memory 620 may include a computer program product 625, which has one or more program modules configured to execute various methods or acts of various embodiments of the present disclosure.

The communication unit 640 communicates with a further computing device through the communication medium. Additionally, the functionality of the components of the device 600 may be implemented in a single computing cluster or multiple computing machines which may communicate through communication connections. Therefore, the device 600 may be operated in a networked environment using logical connections with one or more other servers, network personal computers (PCs), or another network node.

The input device 650 may be one or more input devices, such as a mouse, a keyboard, a trackball, etc. The output device 660 may be one or more output devices, such as a display, a speaker, a printer, etc. The device 600 may also communicate with one or more external devices (not shown) as needed through the communication unit 640, such as storage devices, display devices, etc., to communicate with one or more devices that enable users to interact with the device 600, or to communicate with any device (such as a network card, a modem, etc.) that enables the device 600 to communicate with one or more other computing devices. Such communication may be performed via an input/output (I/O) interface (not shown).

According to the exemplary embodiments of the present disclosure, a computer readable storage medium is provided, on which computer executable instructions or computer programs are stored, wherein the computer-executable instructions or computer programs are executed by a processor to implement the methods described above. According to the example implementations of the present disclosure, a computer program product is also provided, which is tangibly stored on a non-transient computer readable medium and includes computer executable instructions, which are executed by a processor to implement the methods described above.

Herein, various aspects of the present disclosure are described with reference to flowcharts and/or block diagrams of the methods, apparatuses, devices, and computer program products implemented in accordance with the present disclosure. It should be understood that each block in the flowchart and/or block diagram, and the combination of each block in the flowchart and/or block diagram, may be implemented by computer readable program instructions.

These computer-readable program instructions may be provided to the processing units of general-purpose computers, specialized computers, or other programmable data processing devices to produce a machine that generates an apparatus to implement the functions/actions specified in one or more blocks in the flow chart and/or the block diagram when these instructions are executed through the computer or other programmable data processing apparatuses. These computer-readable program instructions may also be stored in a computer-readable storage medium. These instructions enable a computer, a programmable data processing apparatus and/or other devices to work in a specific way. Therefore, the computer-readable medium containing the instructions includes a product, which includes instructions to implement various aspects of the functions/actions specified in one or more blocks in the flowchart and/or the block diagram.

The computer readable program instructions may be loaded onto a computer, other programmable data processing apparatus, or other devices, so that a series of operational steps may be executed on a computer, other programmable data processing apparatus, or other devices, to generate a computer-implemented process, such that the instructions which execute on a computer, other programmable data processing apparatuses, or other devices implement the functions/acts specified in one or more blocks in the flowchart and/or the block diagram.

The flowchart and the block diagram in the drawings show the possible architecture, functions and operations of the system, the method and the computer program product implemented in accordance with the present disclosure. In this regard, each block in the flowchart or the block diagram may represent a part of a unit, a program segment or instructions, which contains one or more executable instructions for implementing the specified logic function. In some alternative implementations, the functions labeled in the block may also occur in a different order from those labeled in the drawings. For example, two consecutive blocks may actually be executed in parallel, and sometimes may also be executed in a reverse order, depending on the functionality involved. It should also be noted that each block in the block diagram and/or the flowchart, and combinations of blocks in the block diagram and/or the flowchart, may be implemented by a dedicated hardware-based system that executes the specified functions or acts, or by the combination of dedicated hardware and computer instructions.

Each implementation of the present disclosure has been described above. The above description is an example, not exhaustive, and is not limited to the disclosed implementations. Without departing from the scope and spirit of the described implementations, many modifications and changes are obvious to ordinary skill in the art. The selection of terms used in the present disclosure aims to best explain the principles, practical application or improvement of technology in the market of each implementation, or to enable other ordinary skill in the art to understand the various implementations disclosed herein.

## Claims

1. A method of device management, comprising:
receiving a first configuration command at a first baseboard management controller (BMC) associated with a processing unit, the first BMC being currently in a management network;
causing the first BMC to join a virtual local area network (VLAN) where a server is located according to the first configuration command, the processing unit being connected to the server; and
in response to receiving a management command for the processing unit, forwarding the management command to the server via the VLAN.

2. The method of claim 1, wherein the first configuration command indicates a joining configuration of the VLAN and a network forwarding configuration from the first BMC to the server.

3. The method of claim 1, wherein receiving the first configuration command comprises:
in response to a failure of the processing unit, receiving the first configuration command.

4. The method of claim 1, further comprising:
receiving a second configuration command at the first BMC; and
causing the first BMC to exit the VLAN according to the second configuration command.

5. The method of claim 4, wherein the second configuration command indicates an exit configuration of the VLAN and a network forwarding cessation from the first BMC to the server.

6. The method of claim 4, wherein receiving the second configuration command comprises:
in response to a recovery of the failure of the processing unit, receiving the second configuration command.

7. The method of claim 1, wherein forwarding the management command to the server via the VLAN comprises:
forwarding the management command to a second BMC associated with the server via the VLAN.

8. The method of claim 1, wherein forwarding the management command to the server via the VLAN comprises:
transmitting the management command to the server according to a static Internet protocol (IP) address of the server in the VLAN.

9. The method of claim 1, wherein the management command is received via the management network, the management network and the VLAN being separated by a switch associated with the processing unit.

10. The method of any of claims 1 to 9, wherein the processing unit comprises a system-on-chip (SoC) of a data processing unit (DPU).

11. A baseboard management controller BMC, comprising:
a first receiving module configured to receive a first configuration command when in a management network;
a network joining module configured to cause the (BMC) to join a virtual local area network (VLAN) where a server is located according to the first configuration command, a processing unit associated with the BMC being connected to the server; and
a command forwarding module configured to, in response to receiving a management command for the processing unit, forward the management command to the server via the VLAN.

12. A processing device, comprising:
a processing unit; and
a baseboard management controller BMC associated with the processing unit, the BMC being configured to:
receive a first configuration command when in a management network, join the VLAN according to the first configuration command; and
in response to receiving a management command for the processing unit, forward the management command to the server via the VLAN.

13. A service system, comprising:
a processing unit;
a server, connected to the processing unit, the processing unit and the server being configured to communicate with each other in a virtual local area network VLAN; and
a first baseboard management controller BMC associated with the processing unit, the first BMC being configured to operate in a management network and configured to:
receive a first configuration command;
join the VLAN according to the first configuration command; and
in response to receiving a management command for the processing unit, forward the management command to the server via the VLAN.

14. The service system of claim 13, wherein the server comprises a second BMC, and wherein the first BMC is configured to forward the management command to the second BMC via the VLAN.

15. The service system of claim 13, further comprising:
a switch associated with the processing unit, the switch being at least configured to perform data exchange between the management network and the VLAN.

16. The service system of claim 13, wherein the first BMC is configured to:
in response to a failure of the processing unit, receive the first configuration command.

17. The service system of claim 13, wherein the first BMC is configured to:
receive a second configuration command at the first BMC; and
cause the first BMC to exit the VLAN according to the second configuration command.

18. The service system of claim 17, wherein the first BMC is configured to:
in response to a recovery of the failure of the processing unit, receive the second configuration command.

19. The service system of claim 13, wherein the processing unit comprises a system-on-chip (SoC) of a data processing unit DPU.

20. A computer readable storage medium, having a computer program stored thereon, the computer program, when executed by a processor, implementing the method according to any of claims 1 to 10.
